# EUROPEAN PATENT SPECIFICATION

(11) **EP 3 007 372 B1**
(45) Date of publication and mention of the grant of the patent: **28.06.2017**
(21) Application number: 14189745.4
(22) Date of filing: 21.10.2014
(51) Int. Cl.: H04B 11/00, E21B 47/16

(54) **Transmission of information over a functional structure having a different function**
Übertragung von Information über eine funktionelle Struktur mit unterschiedlicher Funktion
Transmission d'informations sur une structure fonctionnelle ayant une fonction différente

(30) Priority: 10.10.2014 IT MI20141777
(43) Date of publication of application: 13.04.2016
(73) Proprietor: Soluzioni Ingegneria S.r.l., 23887 Olgiate Molgora (LC) (IT)
(72) Inventor: Pezzola, Marco Ezio, 23900 Lecco (LC) (IT); Leo, Elisabetta, 23900 Lecco (IT); TARONI, Niccolò, 23900 Lecco (LC) (IT)
(74) Representative: Pezzoli, Ennio

(56) References cited:
- EP-A1- 2 763 335
- EP-A2- 1 950 586
- WO-A2-2010/054353
- FR-A1- 2 556 043
- US-A- 4 293 936
- US-A- 5 995 449
- RAN WU ET AL: "Wavelets application on acoustic emission signal detection in pipeline", ELECTRICAL AND COMPUTER ENGINEERING, 2008. CCECE 2008. CANADIAN CONFERENCE ON, IEEE, PISCATAWAY, NJ, USA, 4 May 2008 (2008-05-04), pages 1211-1214, XP031286160, ISBN: 978-1-4244-1642-4

## Description

### Technical field

The present disclosure relates to the information transmission field. More specifically, this disclosure relates to the transmission of information over a functional structure.

### Background

The background of the present disclosure is hereinafter introduced with the discussion of techniques relating to its context. However, even when this discussion refers to documents, acts, devices and the like, it does not suggest or represent that the discussed techniques are part of the prior art or are common general knowledge in the field relevant to the present disclosure.

The need of transmitting information remotely (by technological means) is commonplace in a large number of applications.

For this purpose, several telecommunication techniques are available. Particularly, the telecommunication techniques may be based either on wired transmissions (wherein the information is transmitted by electrical signals over wires) or on wireless transmissions (wherein the information is transmitted by electromagnetic waves without any physical connection).

However, the use of such telecommunication techniques may be impractical or even impossible in specific situations.

For example, the application of wires to a structure that is already in operation may be very difficult and expensive (especially when it is not readily accessible); moreover, the wires cannot be used in hostile environments wherein they may be subject to chemical or physical attacks. In any case, the transmission of information with either electrical signals or electromagnetic waves may be very unreliable (down to become unfeasible in practice) in other hostile environments wherein interferences or noise may disrupt it.

A typical example is in connection with a drillship that is used for service or scientific offshore drilling. In this case, it would be useful to transmit measures performed at the sea bottom to the drillship (at the sea surface). However, it is not possible either to use wires (for example, along a pipeline extending from the sea bottom to the drillship) or to use wireless transmissions.

Other telecommunication techniques are disclosed in EP-A-2763335, US-A-5995449, US-A-4293936, EP-A-1950586, FR-A-2556043, WO-A-2010/054353 and RAN WU ET AL: "Wavelets application on acoustic emission signal detection in pipeline", ELECTRICAL AND COMPUTER ENGINEERING, 2008. CCECE 2008. CANADIAN CONFERENCE ON, IEEE, PISCATAWAY, NJ, USA, 4 May 2008, pages 1211-1214, XP031286160, ISBN: 978-1-4244-1642-4.

Moreover, the pipeline of the drillship (or more generally of any other application wherein it is used to transport substances flowing through pipes, or tubes, generally over relatively long distances) may be subject to malfunctioning of different types.

For example, violent events (such as earthquakes or shocks) may cause structural alterations (up to breakages) of the pipeline. Moreover, mechanical stresses repeatedly applied to the pipeline in operation may weaken it, and then cause fatigue cracks. Wearing over time of the pipeline (and particularly corrosion occurring inside the pipeline reducing a thickness of its walls) also make it more vulnerable to breakages.

The resulting defects of the pipeline may involve failures of different severity. For example, plastic deformations of the pipeline may hinder the transport flow (with corresponding performance reductions). Minor damages of the pipeline (such as small holes) may cause leakages of the transported material (with corresponding economic losses and risks of environmental pollution). Complete failures of the pipeline may instead result in service interruptions, property damages and even catastrophic events (comprising fatalities).

Several techniques are available aiming at detecting and preferably predicting defects of the pipeline.

For example, the pipeline may be inspected *in-situ* either internally or externally. However, the internal inspections (for example, with robots) are expensive and require stopping the transport flow; the external inspections are invasive (for example, because of the need of removing and then restoring insulating sleeves), inaccurate (for example, for detecting internal corrosions) and complex or even impossible (for example, when the pipeline is interred or submerged deeply).

Moreover, the pipeline may be inspected remotely by inferring its status from different indirect measures. For example, ultrasonic techniques involve the application of ultrasonic excitations to the pipeline. Particularly, in conventional ultrasound techniques the ultrasound excitations are applied locally to measure the thickness of the pipeline. In Guided Ultrasound Waves (UGW) techniques, instead, the ultrasound excitations are applied at an end of the pipeline; these excitations generate ultrasonic sounds, which are reflected by any discontinuities (symmetrically for structural features and asymmetrically for defects) and by another end of the pipeline. Impedance techniques instead involve measuring the electrical impedance of piezoelectric sensors that are applied to the pipeline, which electrical impedance in turn depends on the mechanical impedance of the pipeline that changes with the presence of defects.

Moreover, transient alterations (for example, turbulences generated by incorrect closing of valves, pressure losses) may also impair the transport flow, and then reduce the performance of the pipeline; moreover, these alterations may increase the mechanical stresses of the pipeline and then facilitate the occurrence of defects.

### Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an identification of its key elements nor as a delineation of its scope.

In general terms, the present disclosure is based on the idea of transmitting information by the vibration of a functional structure.

Particularly, an aspect provides a system for transmitting information from an information source to an information target (wherein a functional structure having a function different from the transmission of information is arranged between them); for this purpose, a source communication device arranged in correspondence to the information source forces the functional structure to vibrate, and a target communication device arranged in correspondence to the information target monitors a structural vibration of the functional structure.

A further aspect provides a corresponding method.

A further aspect provides a computer program for implementing the method (and a corresponding computer program product).

More specifically, one or more aspects of the present disclosure are set out in the independent claims and advantageous features thereof are set out in the dependent claims, with the wording of all the claims that is herein incorporated *verbatim* by reference (with any advantageous feature provided with reference to any specific aspect that applies *mutatis mutandis* to every other aspect).

### Brief description of the drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes - such as value, content and representation). In this respect, it is expressly intended that the figures are not necessary drawn to scale (with some details that may be exaggerated and/or simplified) and that, unless otherwise indicated, they are merely used to illustrate the structures and procedures described herein conceptually. Particularly:
FIG.1 shows a pictorial representation of a system wherein the solution according to an embodiment of the present disclosure may be applied,
FIG.2A-FIG.2H show exemplary applications of the solution according to an embodiment of the present disclosure,
FIG.3 shows a principle block diagram of a system that may be used to implement the solution according to an embodiment of the present disclosure,
FIG.4 shows the main software components that may be used to implement the solution according to an embodiment of the present disclosure, and
FIG.5A-FIG.5C show an activity diagram describing the flow of activities relating to an implementation of the solution according to an embodiment of the present disclosure.

### Detailed description

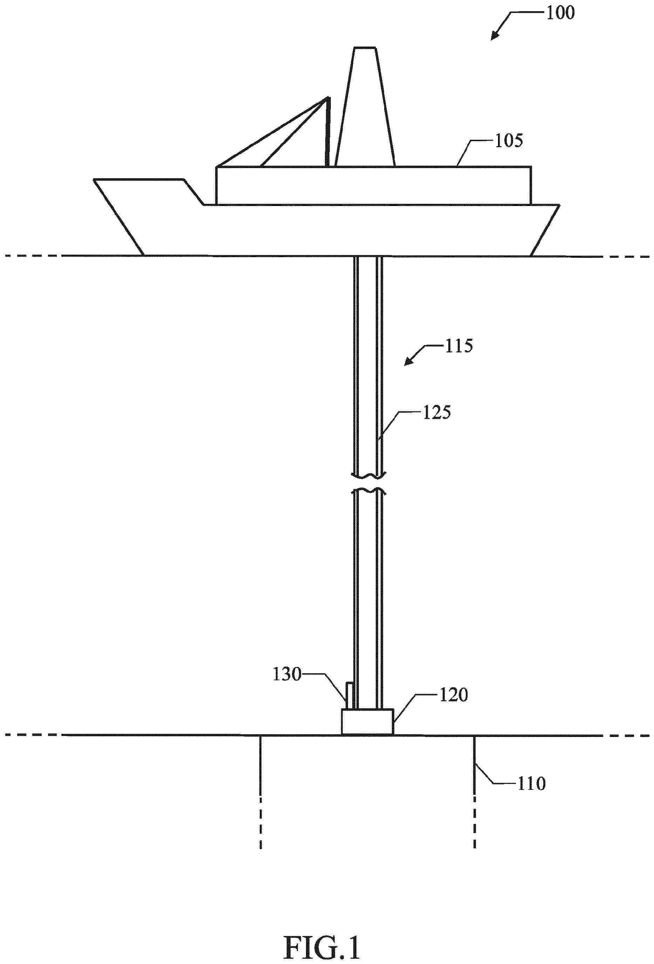

With reference in particular to FIG.1, a pictorial representation is shown of a system 100 wherein the solution according to an embodiment of the present disclosure may be applied.

Particularly, the system 100 comprises a drillship 105 (*i.e.,* a ship designed for service/scientific offshore drilling). The drillship 105 is used to perform exploratory, maintenance or completion operations on an (oil/gas) well 110. For this purpose, a drilling raiser 115 is lowered from the drillship 105 (at the sea surface) to the sea bottom, and it is connected to a wellhead 120 implementing an interface to the well 110. The drilling raiser 115 comprises a pipeline 125, which provides a temporary extension of the well 110 (for transporting the oil/gas flowing through it to the drillship 105).

In this context, information may need to be transmitted from the well 110 to the drillship 105. For example, one or more sensors 130 are arranged at a lower end of the drilling raiser 115 (close to the wellhead 120 at the sea bottom); the sensors 130 may measure the temperature inside/outside the drilling raiser 115, the pressure of the oil/gas in the pipeline 125, the outflow of the oil/gas from the well 110. In this case, the measures performed by the sensors 130 should be transmitted to the drillship 105 at the sea surface (for example, for analysis, diagnostic or monitoring purposes). In addition or in alternative, information may need to be transmitted from the drillship 105 to the well 110 (for example, control signals for opening/closing valves, sectioning devices).

In the solution according to an embodiment of the present disclosure, the information is transmitted by exploiting a functional structure (for example, the pipeline 125), which is already arranged between the sensors 130 (or any other information source) and the drillship 105 (or any other information target) with a function different from the transmission of information (*i.e.,* transporting the oil/gas in the case of the pipeline 125).

This allows transmitting the information in whatever environment, comprising hostile environments subject to chemical/physical attacks or to interferences/noise. This result is achieved in a very simple way (without the need of applying any transmission medium from the information source to the information target) and at low cost (since it exploits the functional structure that is already available for a different purpose).

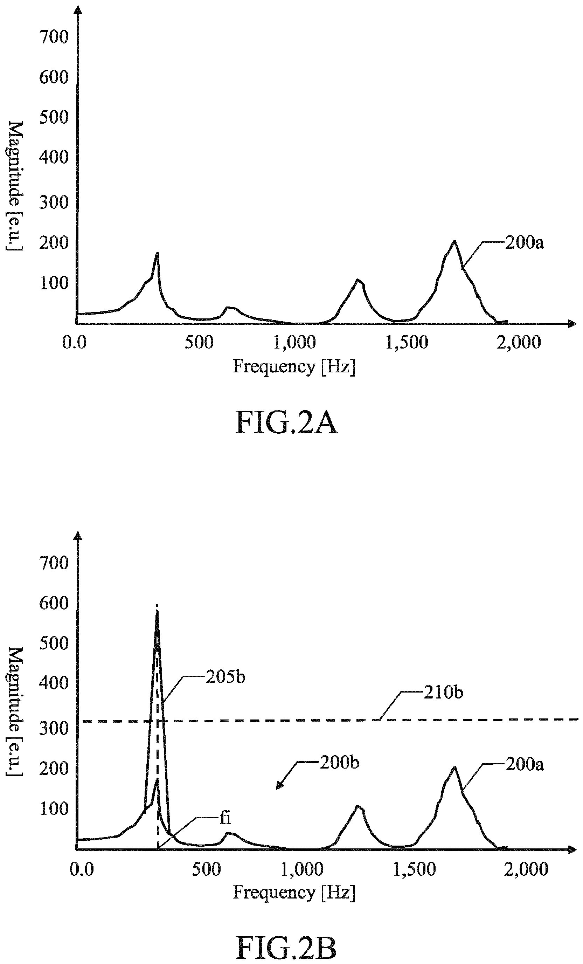

With reference now to FIG.2A-FIG.2H, exemplary applications are shown of the solution according to an embodiment of the present disclosure.

Generally, the information to be transmitted is received from the sensors in separate (inbound) information messages. For example, each information message is of the digital type and it is formed by a fixed number of bits with a predefined format, such as 8 bits (b₀b₁b₂b₃b₄b₅b₆b₇) with a starting code for identifying it (bits b₀b₁b₂=101), an information payload for its actual information content (bits b₂b₃b₄b₅b₆) and an Error Correction Code (ECC) for detecting and possibly correcting the information message (a parity bity b₇).

The information message is encoded into a corresponding (inbound) information signal. The encoding is performed according to an information coding (schema) based on an (analog) information vibration different from an operative vibration of the pipeline in operation. The pipeline is then forced to vibrate through dedicated actuators (at its lower end close to the sensors) according to the information signal. A structural vibration of the pipeline (at its upper end close to the drillship) is monitored exploiting dedicated sensors to detect an (outbound) information signal conforming to the same information coding. The information signal is decoded into an (outbound) information message according to the information coding. The information message is then provided to the drillship.

More specifically, several forces act on the pipeline in operation (such as due to sea waves, drillship movement, drilling operations, oil/gas flow), which forces cause it to vibrate accordingly. In the frequency domain, as shown in FIG.2A, the resulting operation vibration of the pipeline generally has a wide bandwidth as represented by its auto-spectrum 200a, which plots the (over-time averaged) magnitude (in engineering units [e.u.] on the ordinate axis) against the frequency (in [Hz] on the abscissa axis).

Moving to FIG.2B, the information vibration may have an information frequency equal to one of the resonance frequencies of the pipeline as defined by the auto-spectrum of the operation vibration (*i.e.,* its relative maxima at which the pipeline vibrates at a larger extent, ideally equal to its natural frequencies at which it vibrates freely), such as fi=300 [Hz] in the example at issue. In this case, a low force may be applied to the pipeline to generate the information vibration (with a power even comparable to the one of the forces that act on the pipeline in operation) since the pipeline resonates so as to magnify the information vibration; moreover, this naturally amplifies the transmission, overcoming possible environment noise. As a result, in an auto-spectrum 200b of a (total) structural vibration of the pipeline the contribution of the information vibration (denoted with the reference 205b) may be discriminated from the contribution of the operation vibration (denoted with the same reference 200a) by a peak at the information frequency fi higher than an information threshold 210d significantly higher than the contribution of the operation vibration 200a at the same information frequency fi.

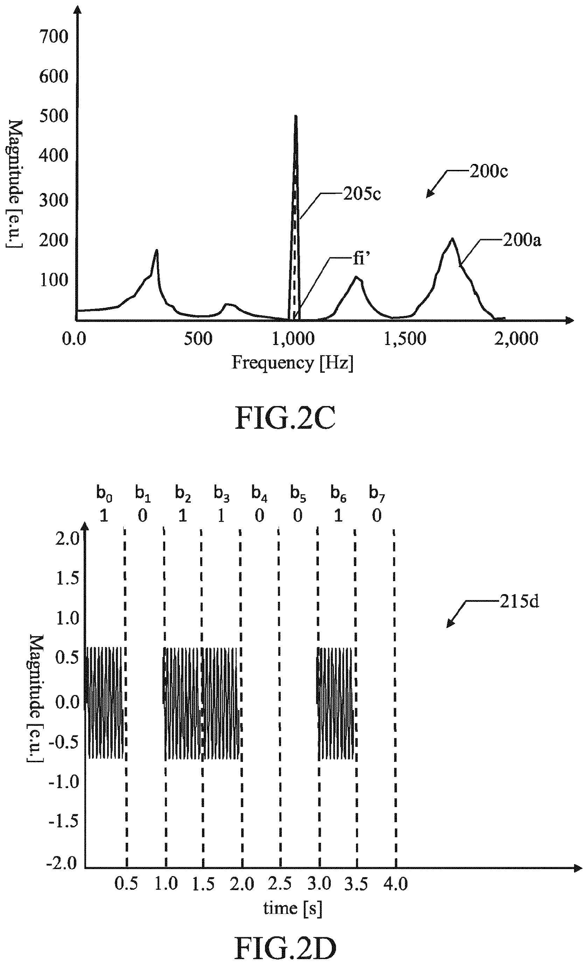

Moving to FIG.2C, the information vibration may also be generated by applying a high force to the pipeline (for example, with a power at least 3-4 times the one of the forces that act on the pipeline in operation). In this case, the information frequency may be chosen far away from the resonance frequencies of the pipeline (for example, at the relative minima of the auto-spectrum of the operation vibration), such as fi'=1,000 [Hz] in the example at issue. As a result, in an auto-spectrum 200c of the structural vibration of the pipeline the contribution of the information vibration (denoted with the reference 205c) may be discriminated from the contribution of the operation vibration (again denoted with the same reference 200a) by a peak at the information frequency fi' (with a power higher than an information threshold equal to a predefined significant value) that is distinct from the peaks due to the contribution of the operation vibration at the other frequencies.

Moving to FIG.2D, a sequence of time slots of fixed length (for example, 0.5 [s]) is dedicated to the bits of the information message; in each time slot, the corresponding bit bᵢ (with i=0...7 in the example at issue) is represented by the presence or by the absence of the information vibration when at the logic value 1 or at the logic value 0, respectively. Therefore, the auto-spectrum of the structural vibration exhibits a peak higher than the corresponding information threshold at the information frequency fi (as in FIG.2B) or at the information frequency fi' (as in FIG.2C) when the information vibration is present, whereas these peaks are missing otherwise (as in FIG.2A). For example, the information signal shown in the figure, denoted with the reference 215d, represents the information message 10110010 (*i.e.,* starting code 101, information payload 1001 and parity bit 0).

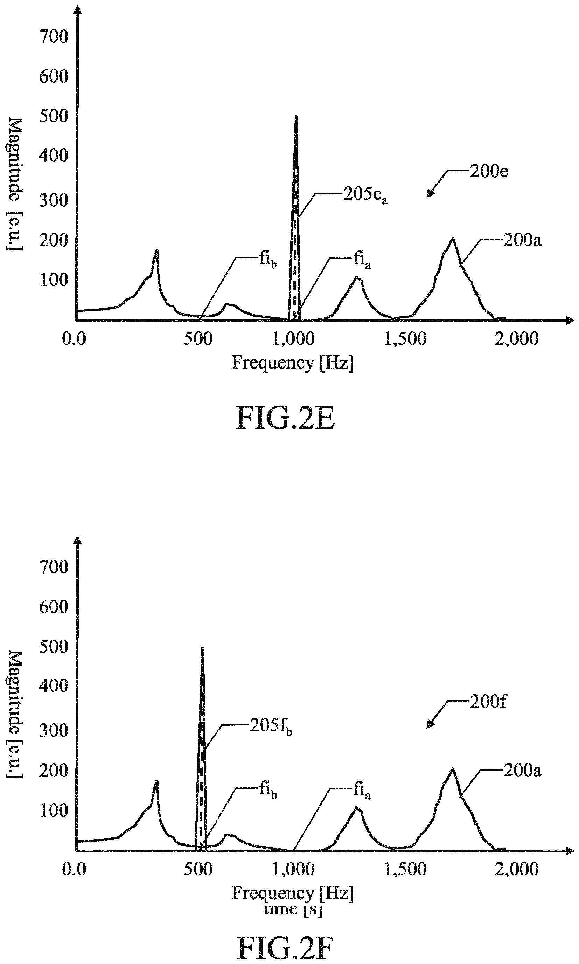

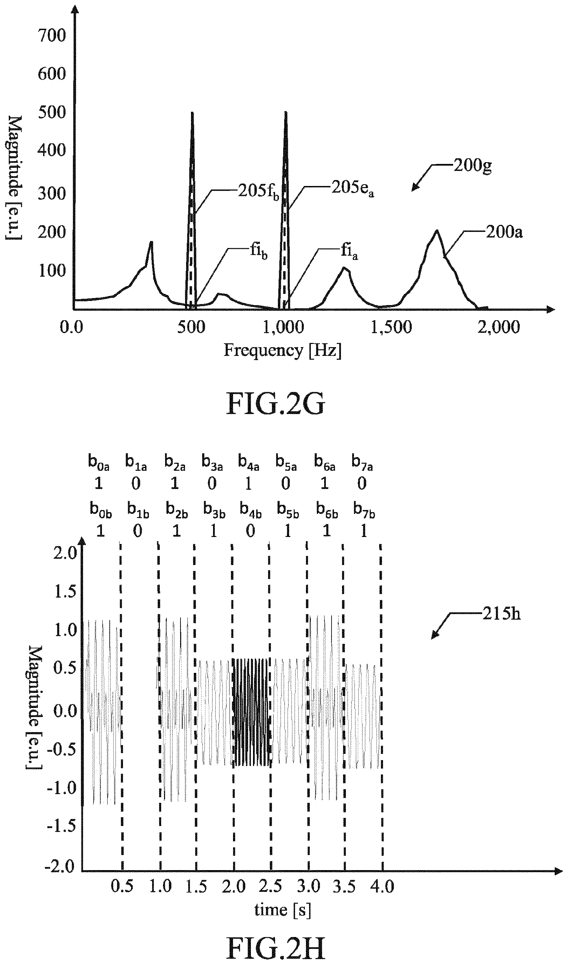

As a further improvement, a different information frequency may be associated with each sensor, for example, fiₐ=1,000 [Hz] and fi_{b}=500 [Hz] at corresponding relative minima in the auto-spectrum of the operation vibration (with similar considerations that apply for its relative maxima). In this case, the information messages from different sensors may be discriminated according to the information frequencies of the corresponding information vibrations, with these information messages that may also be transmitted concurrently. In this case as well, in each time slot corresponding bits bᵢₐ (for the information message at the information frequency fiₐ) and b_{ib} (for the information message at the information frequency fi_{b}) are represented by the presence or by the absence of the associated information vibrations when at the logic value 1 or at the logic value 0, respectively. Therefore, as shown in FIG.2E, an auto-spectrum 200e of the structural vibration exhibits a peak at the information frequency fiₐ when its information vibration (whose contribution is denoted with the reference 205eₐ) is present and no peak at the information frequency fi_{b} when its information vibration is missing. Conversely, as shown in FIG.2F, an auto-spectrum 200f of the structural vibration exhibits no peak at the information frequency fiₐ when its information vibration is missing and a peak at the information frequency fi_{b} when its information vibration (whose contribution is denoted with the reference 205f_{b}) is present. Likewise, as shown in FIG.2G, an auto-spectrum 200g of the structural vibration exhibits both a peak at the information frequency fiₐ and a peak at the information frequency fi_{b} when their information vibrations (whose contributions are again denoted with the references 205eₐ and 205f_{b}, respectively) are present. Conversely, the auto-spectrum of the structural vibration exhibits no peak at both the frequencies fiₐ and fi_{b} when their information vibrations are missing (as in FIG.2A). For example, the sum of two (concurrent) information signals shown in FIG.2H, denoted as a whole with the reference 215h, represents the information message 10101010 (*i.e.,* starting code 101, information payload 0101 and parity bit 0) associated with the information frequency fiₐ (bits bᵢₐ) and the information message 10110111 (*i*.*e.,* starting code 101, information payload 1011 and parity bit 1) associated with the information frequency fi_{b} (bits bi_{b}).

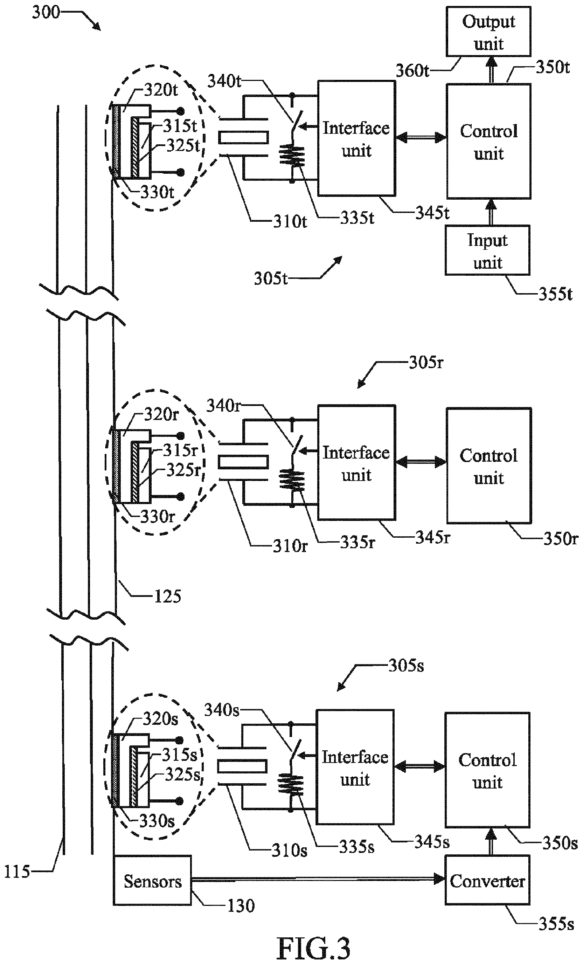

With reference now to FIG.3, a principle block diagram is shown of a system 300 that may be used to implement the solution according to an embodiment of the present disclosure.

Particularly, the system 300 comprises a source communication device 305s that is arranged at the lower end of the drilling raiser 115 (in a protected environment, for example, in a water-proof case). The source communication device 305s comprises a piezoelectric module 310s (or any other actuator/sensor) that is applied to the pipeline 125 (for example, directly on an external surface thereof when the pipeline 125 has a low curvature or with a flat interface plate otherwise, on a flange connecting two adjacent tubes of the pipeline). The piezoelectric module 310s may operate either as a sensor (to force the pipeline 125 to vibrate according to the information signal corresponding to each information message to be transmitted) or as an actuator (to detect a vibration signal representing the structural vibration of the pipeline 125, from which the information vibration corresponding to each information message is extracted). Indeed, when the pipeline 125 vibrates the piezoelectric module 310s is deformed thereby varying an electric charge stored therein; therefore, by measuring a voltage corresponding to a current supplied by the electric charge of the piezoelectric module 310s it is possible to detect the vibration signal representing the structural vibration of the pipeline 125. On the other hand, when an electric field is applied to the piezoelectric module 310s, it changes thickness and/or length; therefore, by providing a variable voltage to the piezoelectric module 310s corresponding to each information signal it is possible to force it, and then the pipeline 125, to vibrate accordingly.

More specifically, the piezoelectric module 310s comprises two plates (or patches) 315s and 320s of electrically conductive material (for example, metal), between which a layer of piezoelectric material 325s (for example, double-biased quartz) is arranged; the plate 315s has a free surface that is directly accessible to define a terminal of the piezoelectric module 310s, whereas the plate 320s is provided with an extension toward the plate 315s that defines another terminal of the piezoelectric module 310s. The plate 320s is fastened to the pipeline 125, for example, by gluing a free surface of the plate 320s thereon. For this purpose, a glue layer 330s is used, which glue layer 330s has characteristics so as not to interfere substantially with the interaction between the pipeline 125 and the plate 320s (for example, an electrically insulating epoxy glue with a bandwidth complying with the frequencies at issue, such as 0-5 kHz). A resistor 335s and an electronic switch 340s (for example, implemented with a MOS transistor having a control terminal that defines a further terminal of the piezoelectric module 310s) are connected in series to each other, in parallel to the plates 315s,320s; normally, the switch 340s is closed so as to discharge the plates 315s,320s (which are comparable to a capacitor that would tend to accumulate electric charge between its terminals due to the operation vibration of the pipeline 125); this maintains the voltage across the plates 315s,320s at substantially zero value in a rest condition, thereby avoiding any saturation of the piezoelectric module 310s.

The piezoelectric module 310s is connected (via its terminals) to an interface unit 345s. The interface unit 345s is in turn coupled with an Electronic Control Unit (ECU), or simply control unit, 350s; typically, the control unit 350s comprises a micro-processor controlling its operation, a RAM used as a working memory by the micro-processor, a ROM containing base code for a bootstrap of the control unit 350s, and a solid-state mass memory for storing data to be preserved even in the absence of power supply (not shown in the figure). The control unit 350s receives each information message to be transmitted from the sensors 130 through a converter 355s. The control unit 350s controls the interface unit 345s to cause the piezoelectric module 310s to operate as actuator accordingly, for example, by converting the corresponding information signal into a voltage that is amplified and supplied to the piezoelectric module 310s after closing the switch 340s. *Vice-versa,* the control unit 350s controls the interface unit 345s to cause the piezoelectric module 310s to operate as sensor, for example, by measuring a voltage at the piezoelectric module 310s after closing the switch 340s and then amplifying and converting it into the corresponding vibration signal. The whole source communication device 305s is supplied by a battery or by a harvesting circuit, for example, comprising an impedance matching unit further providing the voltage at the piezoelectric module 310s to a rectifier, which converts it into a corresponding direct voltage that is stored into a capacitor connected to a boost converter and to a voltage regulator (not shown in the figure).

Likewise, the system 300 comprises a target communication device 305t that is arranged at the upper end of the drilling raiser 115 (in a protected environment as well). The target communication device 305t has a similar structure with a piezoelectric module 310t that is applied to the pipeline 125 (with its plates 315t,320t, layer of piezoelectric material 325t, glue layer 330t, resistor 335t and switch 340t), an interface unit 345t and a control unit 350t. In this case, an input unit 355t is used to enter commands/information for the control unit 350t; moreover, the control unit 350t provides each information message received from the source communication device 305s to an output unit 360t arranged on the drillship, not shown in the figure (for example, a logger with a display).

The system 300 may also comprise one or more relay communication devices 305r, which are arranged (in a protected environment as well) between the source communication device 305s and the target communication device 305t (for example, every 100-500 [m]). Each relay communication device 305r too has a similar structure with a piezoelectric module 310r that is applied to the pipeline 125 (with its plates 315r,320r, layer of piezoelectric material 325r, glue layer 330r, resistor 335r and switch 340r), an interface unit 345r and a control unit 350r. In this case, the control unit 340r regenerates each information signal that is received by forcing the pipeline 125 to vibrate accordingly. This substantially increases the reliability of the transmission (especially when the source communication device 305s and the target communication device 305t are arranged at long distance); for this purpose, the lower the vibration transmission characteristics of the pipeline the higher the number of the relay communication devices 305r (down to none when the pipeline has very good vibration transmission characteristics that allow transmitting the information signals from the source communication device 305s to the target communication device 305t without any regeneration thereof).

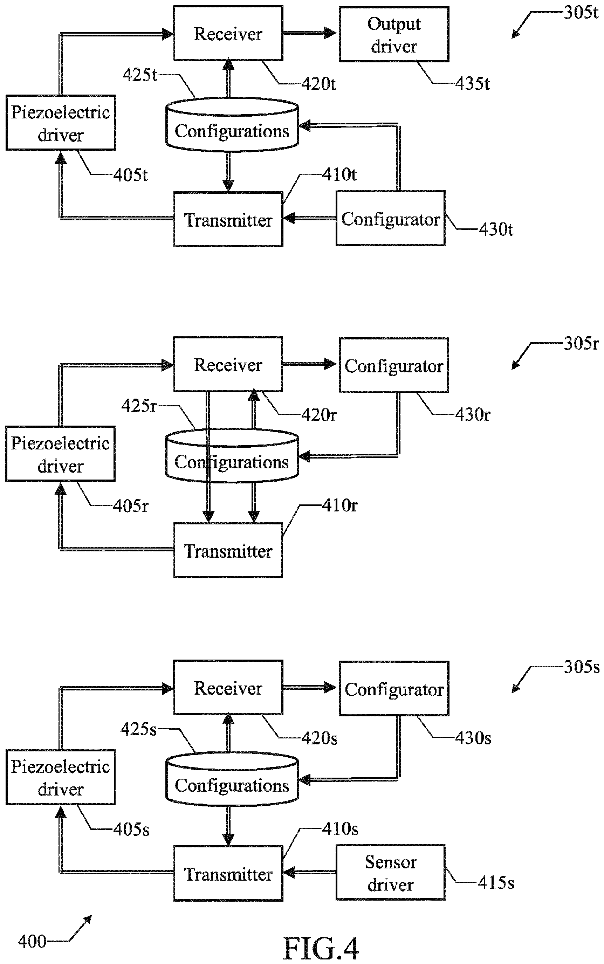

With reference now to FIG.4, the main software components are shown that may be used to implement the solution according to an embodiment of the present disclosure.

These software components are denoted as a whole with the reference 400. The information (programs and data) is typically stored in the mass memory and loaded (at least partially) into the working memory of the control unit of each (source, target and possibly relay) communication device when the programs are running. The programs are initially installed onto the mass memory, for example, from a (removable) solid-state memory card. In this respect, each software component may represent a module, segment or portion of code, which comprises one or more executable instructions for implementing the specified logical function.

Starting with the source communication device 305s, a piezoelectric driver 405s drives the corresponding piezoelectric module. A transmitter 410s controls the piezoelectric driver 405s when the piezoelectric module operates as actuator; for this purpose, the transmitter 410s interfaces with a sensor driver 415s that drives the sensors. A receiver 420s instead monitors the vibration signals provided by the piezoelectric driver 405s when the piezoelectric module operates as sensor. Both the transmitter 410s and the receiver 420s access a configuration repository 425s, which stores configuration information of the source communication device 305s. The receiver 420s controls a configurator 430s, which maintains the configuration repository 425s.

Moving to the target communication device 305t, it likewise runs a piezoelectric driver 405t, a transmitter 410t and a receiver 420t that access a configuration repository 425t. In this case, a similar configurator 430t maintains the configuration repository 425t and it further controls the transmitter 410t. Moreover, the receiver 420t controls an output driver 435t that drives the output unit.

Each relay communication device 305r (when it is present) likewise runs a piezoelectric driver 405r, a transmitter 410r and a receiver 420r that access a configuration repository 425r, and a configurator 430r (controlled by the receiver 420r) that maintains the configuration repository 425r. In this case, the receiver 420r also controls the transmitter 410r.

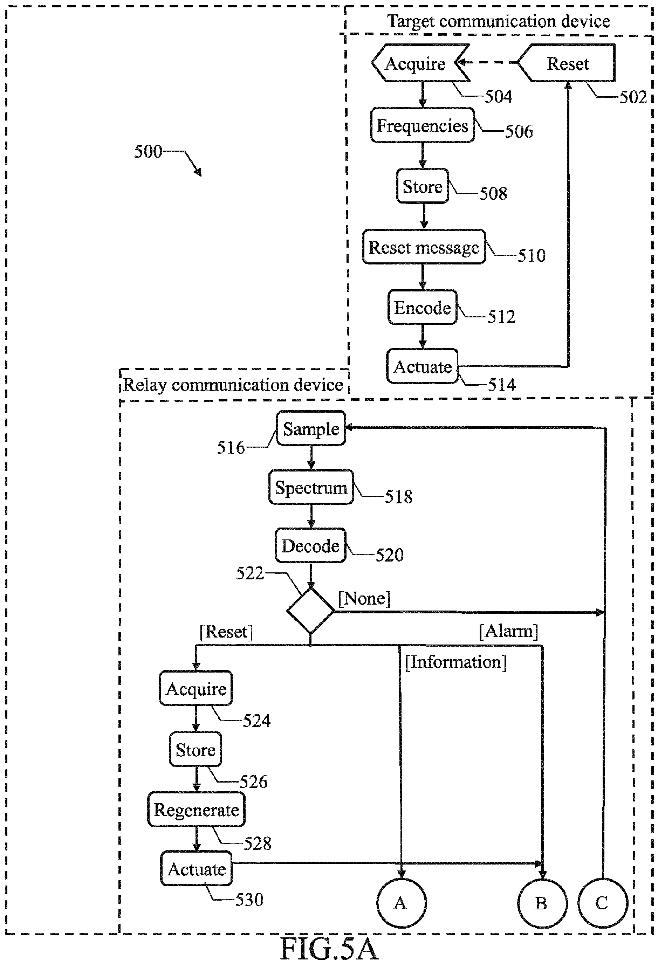

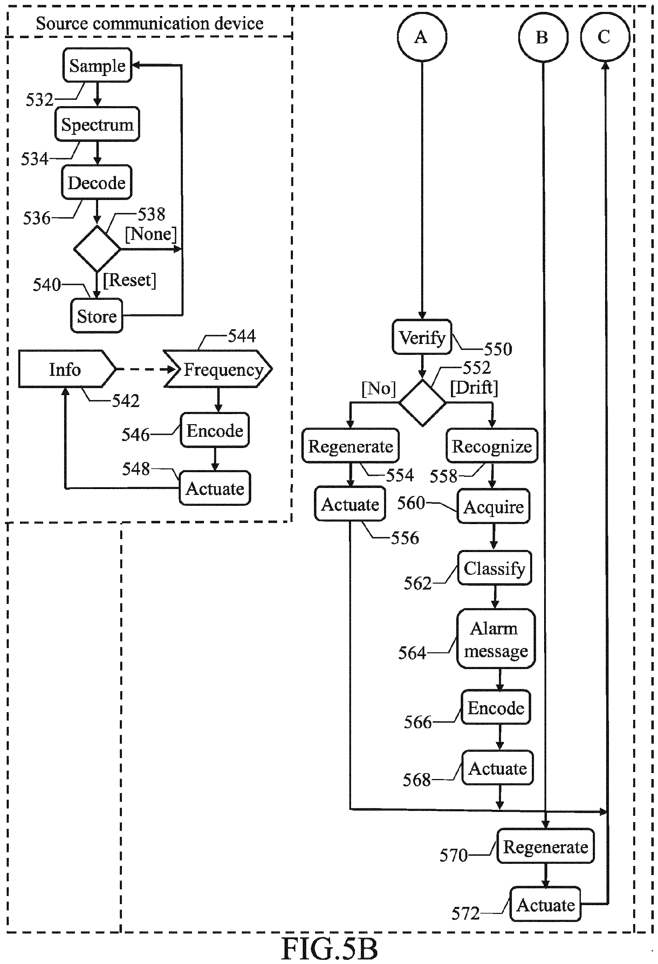

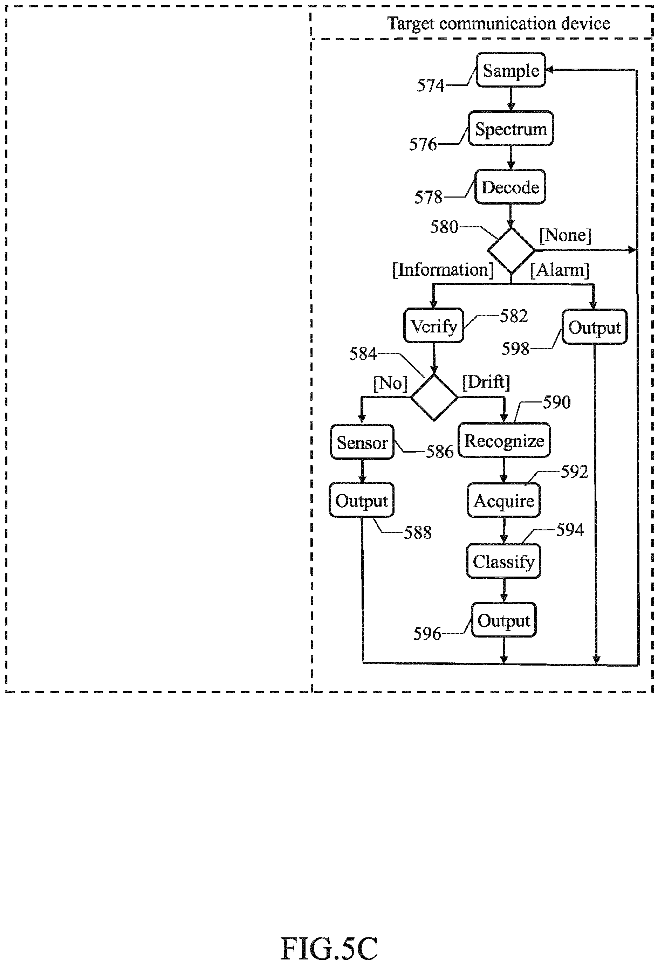

With reference now to FIG.5A-FIG.5C, an activity diagram is shown describing the flow of activities relating to an implementation of the solution according to an embodiment of the present disclosure.

Particularly, the diagram represents an exemplary process that may be used to transmit information from the sensors to the drillship with a method 500. In this respect, each block may correspond to one or more executable instructions for implementing the specified logical function on the relevant (source, target and possibly relay) communication device.

Starting from the swim-lane of the target communication device, the process passes from block 502 to block 504 as soon a reset command for resetting the system is received; generally, the reset command is submitted manually (for example, by a system administrator) when the system is put into operation for the first time or whenever the pipeline is subject to a significant change (for example, after the replacement, addition or removal of parts thereof, after the set of different operative conditions such as oil/gas flow). In response thereto, the vibration signal representing the structural vibration of the pipeline over a predefined reset period (for example, 5-10 [s]) is acquired; for example, the piezoelectric module of the target communication device is enabled as sensor and the corresponding voltage (suitably conditioned and anti-aliasing filtered) is sampled at a rate substantially higher than the frequencies at issue (for example, 5-10 [kHz]). An operation spectrum defined by the (discrete) auto-spectrum of the vibration signal is then calculated (for example, by applying a time windowing based on the Welch's algorithm). Briefly, the vibration signal is logically split into multiple time windows of the same length (for example, 100 windows each one for 0.1-0.6 [s]). The Discrete Fourier Transform (DFT) is calculated from the samples of each time window by applying the Fast Fourier Transform (FFT). The coefficients of these transforms representing the amplitude of frequency components of the auto-spectrum are squared (to obtain proportionality to their power) and then averaged into a total transform. In this way, the obtained operation spectrum magnifies the differences among the frequency components of the vibration signal (thanks to the squaring operation) and it reduces a background noise (thanks to the averaging operation). In the hypothesis that the operation spectrum exhibits no peaks at any one of the frequencies of the coding schemas that are supported by the target communication device (as described in the following), the process continues to block 506 (otherwise, the operation spectrum is discharged since it has been acquired while a transmission is in progress and a new operation spectrum is acquired). At this point, for each sensor the corresponding information frequency is selected in the operation spectrum (*i.e.,* at its relative maxima or minima, for example, in decreasing power order and in increasing power order, respectively); moreover, when the information frequency is based on the relative maxima the corresponding information threshold is set to a predefined multiple of the power of the vibration signal at the same information frequency in the operation spectrum (for example, 1.5-2 times), whereas when the information frequency is based on the relative minima the corresponding information threshold is set to a predefined significant value (for example, 1-5% of the power of the vibration signal at its absolute maximum in the operation spectrum). The configuration information so obtained is stored into the configuration repository at block 508; particularly, this comprises the representation of the operation spectrum defining a reference spectrum (representative of a reference vibration of the functional structure in a reference condition), and the information frequency with the corresponding information threshold associated with each sensor.

With reference now to block 510, a reset message is created with a predefined format (indicating the reset command); the reset message further comprises the information frequency and the information threshold of each sensor. The information message is encoded at block 512 into a reset signal according to a reset coding (schema). The reset coding is similar to the information coding (*i.e.,* in this case as well based on a reset vibration different from the operation vibration of the pipeline, with a predefined reset frequency and a power higher than a reset threshold). However, the reset coding is substantially more robust than the information coding; for example, a ratio between an average error rate of the information coding and an average error rate of the reset coding is (possibly strictly) higher than 10-50. This result may be achieved, for example, with a longer ECC, longer time slots and/or higher powers. As a result, it is possible to ensure the correct transmission of the reset message in most practical situations (with the corresponding performance reduction that is negligible in practice, since the reset message is only transmitted sporadically). The pipeline is then forced to vibrate at block 514 according to the reset signal (by controlling the corresponding piezoelectric module as actuator accordingly). The flow of activity returns to the block 502 waiting for a next reset command.

Moving to the swim-lane of each relay communication device (only one shown in the figure), a loop is performed continuously for monitoring the vibration signal representing the structural vibration of the pipeline. The loop begins at block 516 wherein the piezoelectric module of the relay communication device is enabled as sensor and the corresponding voltage (suitably conditioned and anti-aliasing filtered) is sampled (with the system that is designed so as to ensure that this happens at a sampling rate substantially higher than the frequencies at issue, for example, every 0.1-0.2 [ms]); the sample is added to a shift register that implements a First-In-First-Out (FIFO) buffer with a size corresponding to the (longest) length of each time slot of the coding schemas that are supported by the relay communication device (as described in the following), for example, with 2,500-5,000 entries for a time slot of 0.5 [s] and a sampling rate of one every 0.1-0.2 [ms]. An operation spectrum defined by the (discrete) auto-spectrum of the vibration signal represented by the samples in the buffer is calculated as above at block 518 (after a transient period required to complete the buffer at the beginning). Continuing to block 520, an attempt is made to decode the operation signal according to the supported coding schemas. Particularly, for this purpose the operation spectrum is analysed to verify whether it exhibits a peak around at least one of the frequencies of the supported coding schemas. For example, for each one of these frequencies a peak-holding method may be applied, wherein a frequency interval centred on it (for example, with an extent of 10-100 [Hz]) is scanned by holding a maximum power of the operation spectrum; the peak is detected when the maximum power so obtained is (possibly strictly) higher than the corresponding threshold. If the peak is present, the bit represented by the operation spectrum (decoding the presence of the peak) is added to a first free entry of a message register (for the corresponding message), as indicated by a corresponding bit counter (initialised to zero), and the bit counter is incremented accordingly; conversely, if the peak is not present, the bit represented by the operation spectrum (decoding the absence of the peak) is added to the first free entry of the message register and the bit counter is incremented accordingly only when the receiving of the message is already in progress (as indicated by the bit counter strictly higher than zero), whereas it is discharged otherwise.

The flow of activity then branches at block 522 according to the status of the message registers. If no message register has been completed (as indicated by the corresponding bit counter strictly lower than a total number of entries thereof), the process returns to the block 516 to repeat the same operations described above continuously.

Conversely, as soon as a reset message has been received (by completing the corresponding message register) the process continues to block 524, wherein as above the vibration signal representing the structural vibration of the pipeline over the reset period is acquired, and the operation spectrum defined by the (discrete) auto-spectrum of the vibration signal is calculated. In the hypothesis that the operation spectrum exhibits no peaks at any one of the frequencies of the supported coding schemas, the process continues to block 526 (otherwise, the operation spectrum is discharged and a new operation spectrum is acquired); at this point, the configuration information comprising the representation of the operation spectrum so obtained (defining a reference spectrum as above), and the information frequency with the corresponding information threshold associated with each sensor as extracted from the reset command are stored into the configuration repository. The reset message is regenerated at block 528 by encoding the reset signal according to the same reset coding. The (regenerated) reset signal is then forwarded along the pipeline at block 530 by forcing it to vibrate according thereto. The process then returns to the block 516 to repeat the same operations described above continuously.

Moving to the swim-lane of the source communication device, in this case as well a loop is performed continuously for monitoring the vibration signal representing the structural vibration of the pipeline. The loop begins at block 532 wherein as above the piezoelectric module of the source communication device is enabled as sensor and the corresponding voltage is sampled; the sample is added to a buffer with a size corresponding to the length of each time slot of the reset coding. An operation spectrum defined by the (discrete) auto-spectrum of the vibration signal represented by the samples in the buffer is calculated as above at block 534 (after a transient period required to complete the buffer at the beginning). Continuing to block 536, an attempt is made to decode the operation signal according to the reset schema (by analysing the operation spectrum as above to verify whether it exhibits a peak around the reset frequency) and the message register for the reset message is populated accordingly. The flow of activity then branches at block 538 according to the status of this message register. If the message register has not been completed, the process returns to the block 532 to repeat the same operations described above continuously. Conversely, as soon as a reset message has been received (by completing the message register) the process continues to block 540, wherein the configuration information comprising the information frequency with the corresponding information threshold associated with each sensor as extracted from the reset command are stored into the configuration repository. The process returns to the block 532 to repeat the same operations described above continuously.

In a completely independent way, the process passes from block 542 to block 544 as soon an information message (to be transmitted from one of the sensors to the drillship) is received (for example, as a result of a periodic polling); in response thereto, the information frequency associated with this sensor is retrieved from the configuration repository. The information message is encoded at block 546 into the corresponding information signal according to the information coding and the information frequency associated with the sensor. The pipeline is then forced to vibrate at block 548 according to the information signal. The process returns to the block 542 waiting for a next information message.

Referring back to the block 522 in the swim-lane of each relay communication device, as soon as an information message (or more) has been received (by completing the corresponding message register) the process continues to block 550. At this point, the information message is verified to determine whether any (intermediate) transmission drift has occurred; for example, the transmission drift is detected when the information message has a non-valid value (such as a wrong starting code, a non-meaningful information payload, a wrong parity bit) and/or when the relevant peaks in the corresponding information signal have shifted from the corresponding information frequency by an amount (possibly strictly) higher than an acceptable value (for example, 50-150 [Hz]). The flow of activity then branches at block 552 according to a result of the verification of the information message.

Particularly, if no transmission drift has occurred the process descends into block 554; at this point, the information signal is regenerated by encoding the information message according to the same information coding and information frequency. The (regenerated) information signal is then forwarded along the pipeline at block 556 by forcing it to vibrate according thereto.

Referring back to block 552, if a transmission drift has occurred a malfunctioning condition of the pipeline is recognized at block 558; particularly, the malfunctioning condition is indicative of a malfunctioning in a section of the pipeline up to the relay communication device from a preceding one of the relay communication devices (when available) or from the source communication device otherwise. Continuing to block 560, as above the vibration signal representing the structural vibration of the pipeline over a predefined diagnostic period (for example, equal to the reset period) is acquired and an operation spectrum defined by the (discrete) auto-spectrum of the vibration signal is calculated. In the hypothesis that the operation spectrum exhibits no peaks at any one of the frequencies of the supported coding schemas, the process continues to block 562 (otherwise, the operation spectrum is discharged and a new operation spectrum is acquired); at this point, the operation spectrum is compared with the reference spectrum retrieved from the configuration repository, and the malfunctioning condition is classified accordingly. Particularly, the comparison between the operation spectrum and the reference spectrum may generate one or more difference indicators (such as representing shape changes, peak frequency shifts), which difference indicators are verified against a predefined knowledge base of characteristics thereof defining signatures of known malfunction conditions (populated either according to theoretical references or to experimental results on a reference pipeline). For example, the appearance of a new peak indicates a leakage at a distance depending on its frequency, the frequency shift of the peaks indicates a crack with a length depending on its amount, the change in the natural frequencies of the pipeline indicates a turbulence depending on this change. With reference now to block 564, an alarm message is created with a predefined format (indicating the occurrence of any malfunctioning condition); the alarm message further comprises a unique identifier of the relay communication device (wherein the malfunctioning condition has been recognized) and information about the classification of the malfunctioning condition (for example, its type, position, severity). The alarm message is encoded at block 566 into an alarm signal according to an alarm coding (schema). The alarm coding too is similar to the information coding (*i.e.,* in this case as well based on an alarm vibration different from the operative vibration of the pipeline, with a predefined alarm frequency and a power higher than an alarm threshold), but it is substantially more robust than the information coding (for example, equal to the reset coding); as above, this ensures the correct transmission of the alarm message in most practical situations (with the corresponding performance reduction that is again negligible in practice, since the alarm message is only transmitted sporadically). The pipeline is then forced to vibrate at block 568 according to the alarm signal. The process returns to the block 516 to repeat the same operations described above continuously. In this way, the first relay communication device that detects the malfunctioning condition along the pipeline stops the transmission of the information message (replacing it with the transmission of the corresponding alarm message); alternatively, when the transmission drift is only caused by the shift of the information frequency (without affecting the validity of the information message), the corresponding (regenerated) information signal may be forwarded as above in addition to the alarm message (which then operates simply as a warning).

Referring back to the block 522, as soon as an alarm message has been received (by completing the corresponding message register) the process continues to block 570; at this point, the alarm signal is regenerated by encoding the alarm message according to the same alarm coding. The (regenerated) alarm signal is then forwarded along the pipeline at block 572 by forcing it to vibrate according thereto. The process returns to the block 516 to repeat the same operations described above continuously.

Moving back to the swim-lane of the target communication device, in this case as well a loop is performed continuously for monitoring the vibration signal representing the structural vibration of the pipeline. The loop begins at block 574 wherein as above the piezoelectric module of the target communication device is enabled as sensor, the corresponding voltage is sampled, and the sample is added to a buffer with a size corresponding to the (longest) length of each time slot of the coding schemas that are supported by the target communication device (as described in the following). An operation spectrum defined by the (discrete) auto-spectrum of the vibration signal represented by the samples in the buffer is calculated as above at block 576 (after a transient period required to complete the buffer at the beginning). Continuing to block 578, an attempt is made to decode the operation signal according to the supported coding schemas (by analysing the operation spectrum as above to verify whether it exhibits a peak around at least one of the frequencies of the supported coding schemas) and the corresponding message registers are populated accordingly. The flow of activity then branches at block 580 according to the status of the message registers. If no message register has been completed, the process returns to the block 574 to repeat the same operations described above continuously.

Conversely, as soon as an information message (or more) has been received (by completing the corresponding message register) the process continues to block 582. At this point, the information message is verified as above to determine whether any (end) transmission drift has occurred. The flow of activity then branches at block 584 according to a result of the verification of the information message.

Particularly, if no transmission drift has occurred the process descends into block 586; at this point, the sensor from which the information message has been transmitted is identified according to the information frequency of the information signal (as indicated in the configuration repository). An indication of this sensor (for example, a unique identifier thereof) and the information payload extracted from the information message are output at block 588 (for example, by displaying them on a monitor, with their logging in a dedicated file at the same time). The process returns to the block 574 to repeat the same operations described above continuously.

Referring back to block 584, if a transmission drift has occurred a malfunctioning condition of the pipeline is recognized as above at block 590; in this case, the malfunctioning condition is indicative of a malfunctioning in a section of the pipeline up to the target communication device from a preceding one of the relay information devices (when available) or from the source communication device otherwise. Continuing to block 592, as above the vibration signal representing the structural vibration of the pipeline over the diagnostic period is acquired and an operation spectrum defined by the (discrete) auto-spectrum of the vibration signal is calculated. In the hypothesis that the operation spectrum exhibits no peaks at any one of the frequencies of the supported coding schemas, the process continues to block 594 (otherwise, the operation spectrum is discharged and a new operation spectrum is acquired); at this point, as above the operation spectrum is compared with the reference spectrum retrieved from the configuration repository, and the malfunctioning condition is classified accordingly. With reference now to block 596, an indication of the malfunctioning condition (comprising where the malfunctioning condition has been recognized and its classification) is output (for example, by displaying and logging it as above, with the additional actuation of an alarm signal). The process returns to the block 574 to repeat the same operations described above continuously.

With reference again to the block 580, as soon as an alarm message has been received (by completing the corresponding message register) the process continues to block 598; at this point, as above an indication of the malfunctioning condition (again comprising where the malfunctioning condition has been recognized and its classification) is extracted from the alarm message, and it is then output. The process returns to the block 574 to repeat the same operations described above continuously.

### Modifications

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. In any case, ordinal or other qualifiers are merely used as labels to distinguish elements with the same name but do not by themselves connote any priority, precedence or order. Moreover, the terms include, comprise, have, contain and involve (and any forms thereof) should be intended with an open, non-exhaustive meaning (*i.e.,* not limited to the recited items), the terms based on, dependent on, according to, function of (and any forms thereof) should be intended as a non-exclusive relationship (*i.e.,* with possible further variables involved), the term a/an should be intended as one or more items (unless expressly indicated otherwise), and the term means for (or any means-plus-function formulation) should be intended as any entity or structure adapted or configured for carrying out the relevant function.

For example, an embodiment provides a system for transmitting information from an information source to an information target, wherein a functional structure (having a function different from the transmission of information) is arranged between the information source and the information target. The system comprises a source communication device arranged in correspondence to the information source. The source communication device comprises means for receiving an inbound information message from the information source. The source communication device comprises means for encoding the inbound information message into an inbound information signal according to an information coding; the information coding is based on an information vibration different from an operation vibration of the functional structure in operation. The source communication device comprises means for forcing the functional structure to vibrate according to the inbound information signal. The system comprises a target communication device arranged in correspondence to the information target. The target communication device comprises means for monitoring a structural vibration of the functional structure to detect an outbound information signal conforming to the information coding. The target communication device comprises means for decoding the outbound information signal into an outbound information message according to the information coding. The target communication device comprises means for providing the outbound information message to the information target.

However, the functional structure may be of any type and with any function, with any type of information that may be transmitted from any information source to any information target, either unidirectionally or bidirectionally (see below). The source communication device and the target communication device may be of any type, and they may be arranged at any position (for example, along a corresponding section of the functional structure) and in any way (for example, in dedicated chambers); moreover, the corresponding means may be implemented in any way (for example, with a micro-processor, an ASIC). The (inbound/outbound) information message may have any format (for example, with variable length) and it may be received in any way (for example, asynchronously). The information coding may be of any type (for example, coding the logic values 0 and 1 with different non-null powers). The functional structure may be forced to vibrate in any way (for example, with any number of piezoelectric modules dedicated to operate as actuators, magnetostrictive modules or inductive modules). The structural vibration of the functional structure may be monitored in any way (for example, synchronously with the transmission of the information, with any number of piezoelectric modules dedicated to operate as sensors, accelerometers, MEMs). The outbound information signal may be decoded in any way (for example, as a whole). The outbound information message may be provided to the information target in any way (for example, as a print-out).

In an embodiment, the system further comprises means for acquiring an operation spectrum of an operation signal indicative of the operation vibration; the system comprises means for setting a frequency of the information vibration according to a relative maximum or to a relative minimum of the operation spectrum.

However, these operations may be performed at any place (for example, in the source communication device, either in alternative or in addition to the target communication device, in the latter case without any need of transmitting the corresponding information) and at any time (for example, periodically). The operation spectrum may be of any type (for example, based on the amplitude of the frequency components, either discrete or continuous) and it may be calculated with any spectral density estimation techniques (for example, based on the Laplace's transform). The frequency of the information vibration may be set in any way (for example, to a value outside a bandwidth of the operation signal).

In an embodiment, the information source comprises a plurality of source entities. The source communication device comprises means for selecting a frequency of the inbound information signal according to a transmitting one of the source entities from which the inbound information message is received. The target communication device comprises means for determining the transmitting source entity from a frequency of the outbound information signal. The target communication device comprises means for providing an indication of the transmitting source entity to the information target.

However, the information messages may be received from any number and type of source entities (for example, gauges). The frequency of the inbound information signal may be selected in any way (for example, from frequencies being set all equal to the relative maxima, all equal to the relative minima, in part equal to the relative maxima and in part equal to the relative minima). The indication of the outbound information message may be provided to the information target in any way (see above). More generally, the transmitting source entity may be indicated in other ways (for example, with different coding schemas). In any case, this feature may also be omitted in a basic implementation (or when a single source entity is present).

In an embodiment, the system further comprises one or more relay communication devices, which are ordered along the functional structure from the source communication device to the target communication device. Each relay communication device comprises means for monitoring the structural vibration of the functional structure to detect an outbound intermediate signal conforming to the information coding. The relay communication device comprises means for decoding the outbound intermediate signal into an outbound intermediate message according to the information coding. The relay communication device comprises means for regenerating the outbound information signal by encoding the outbound intermediate message according to the information coding. The relay communication device comprises means for forcing the functional structure to vibrate according to the regenerated outbound information signal.

However, the relay communication devices may be in any number and of any type, and they may be arranged at any position (for example, concentrated in more critical zones of the functional structure, such as in correspondence to discontinuities thereof like decoupling joints); in this case as well, the corresponding means may be implemented in any way, the structural vibration of the functional structure may be monitored in any way and the functional structure may be forced to vibrate in any way (see above). Moreover, the outbound information signal may be regenerated in any way (for example, by correcting it according to the corresponding ECC). In any case, an implementation without any relay communication device is not excluded (for example, when the information source and the information target are relatively close to each other or when the functional structure has very good vibration transmission characteristics).

In an embodiment, the target communication device comprises means for detecting an end transmission drift in response to a frequency shift of the outbound information signal and/or to a non-valid value of the outbound information message. The target communication device comprises means for recognizing (in response to the end transmission drift) a corresponding malfunctioning condition, which is indicative of a malfunctioning in a section of the functional structure (up to the target communication device from a last one of the relay communication devices, when available, or from the source communication device otherwise). The target communication device comprises means for outputting an indication of the corresponding malfunctioning condition.

However, the end transmission drift may be detected in any way (for example, only after the persistence of the frequency drift and/or of the non-valid value in two or more consecutive outbound information signals/messages). The malfunctioning condition may be recognized in any way (for example, only in response to specific types of transmission drift). The indication of the malfunctioning condition may be provided to the information target in any way (see above), with or without any signalling thereof (for example, by actuating an acoustic alarm). In any case, this feature may also be omitted in a simplified implementation.

In an embodiment, each relay communication device comprises means for detecting an intermediate transmission drift in response to a frequency shift of the outbound intermediate signal and/or to a non-valid value of the outbound intermediate message. Each relay communication device comprises means for recognizing (in response to the intermediate transmission drift) a corresponding malfunctioning condition, which is indicative of a malfunctioning in a section of the functional structure (up to the relay communication device from a preceding one of the relay communication devices, when available, or from the source communication device otherwise). Each relay communication device comprises means for generating an inbound alarm message, which comprises an indication of the corresponding malfunctioning condition. Each relay communication device comprises means for encoding the inbound alarm message into an inbound alarm signal according to an alarm coding based on an alarm vibration different from the operation vibration. Each relay communication device comprises means for forcing the functional structure to vibrate according to the inbound alarm signal. The target communication device comprises means for monitoring the structural vibration of the functional structure to detect an outbound alarm signal conforming to the alarm coding. The target communication device comprises means for decoding the outbound alarm signal into an outbound alarm message according to the alarm coding. The target communication device comprises means for outputting an indication of the malfunctioning condition of the outbound alarm message.

However, in this case as well the intermediate transmission drift may be detected in any way, the malfunctioning condition may be recognized in any way and the functional structure may be forced to vibrate in any way (see above). The (inbound/outbound) alarm message may have any format and it may be based on any alarm coding (for example, with a different coding schema, such as a different frequency, for each relay communication device). In this case as well, the structural vibration of the functional structure may be monitored in any way, the outbound alarm signal may be decoded in any way and the indication of the malfunctioning condition may be provided to the information target in any way (see above). In any case, this feature may be supported only by some of the relay communication devices (for example, in the most critical zones of the functional structure), or it may be omitted at all (with or without the detection of the end transmission drift, in this case relating to the whole functional structure).

In an embodiment, the target communication device and each relay communication device (when available) comprises means for acquiring a further operation spectrum of a further operation signal (indicative of the operation vibration of the functional structure) in response to the corresponding malfunctioning condition. The same target/relay communication device comprises means for classifying the corresponding malfunctioning condition according to a comparison between the further operation spectrum and a reference spectrum (of a reference signal indicative of a reference vibration of the functional structure in a reference condition).

However, in this case as well the further operation spectrum may be of any type and it may be calculated in any way, either the same or different from above. The malfunctioning condition may be classified in any way, according to any comparison between the further operation spectrum and any reference spectrum (for example, based on a vote majority policy). In any case, these operations may also be performed only in the target communication device, or they may be omitted at all.

*Vice-versa,* the same operations may also be performed independently of the recognition of the malfunctioning conditions, and more generally independently of the transmission of information (even in a functional structure that does not implement the above-described system), simply for detecting and possibly predicting malfunctioning of the functional structure. For this purpose, it is also possible to acquire the reference/operation spectra after forcing a predefined excitation vibration of the functional structure (for example, of the random type with a substantially flat frequency distribution, varying slowly over a whole bandwidth of the functional structure, or with persistent harmonics). In general, a corresponding diagnostic system may be implemented with any number and type of actuators and sensors, which may also be connected through dedicated wires, a common bus or wireless; moreover, the actuators and sensors may be enabled selectively to monitor different combinations of the corresponding sections of the pipeline. The same diagnostic system may also be used to remove (or at least reduce) the transient malfunctioning of the functional structure (for example, based on harvesting, dissipative or beating techniques).

In an embodiment, the target communication device comprises means for receiving a reset command. The target communication device comprises means for acquiring the reference spectrum in response to the reset command. The target communication device comprises means for storing an indication of the reference spectrum. The target communication device comprises means for generating an inbound reset message, which comprises an indication of the reset command. The target communication device comprises means for encoding the inbound reset message into an inbound reset signal according to a reset coding based on a reset vibration different from the operation vibration. The target communication device comprises means for forcing the functional structure to vibrate according to the inbound reset signal. Each relay communication device comprises means for monitoring the structural vibration of the functional structure to detect an outbound reset signal conforming to the reset coding. Each relay communication device comprises means for decoding the outbound reset signal into an outbound reset message according to the reset coding. Each relay communication device comprises means for acquiring the reference spectrum in response to the outbound reset message. Each relay communication device comprises means for storing an indication of the reference spectrum.

However, the reset command may be received in any way (for example, periodically). In this case as well, the (inbound/outbound) reset message may have any format and it may be based on any reset coding (either the same as or different from the alarm/information coding), and the functional structure may be forced to vibrate in any way (see above). Likewise, the structural vibration of the functional structure may be monitored in any way, the outbound reset signal may be decoded in any way and the reference spectrum may be acquired in any way (see above). Moreover, any indication of the reference spectrum (for example, the coefficients of the corresponding FFT) may be stored in any way (for example, simply loaded in the working memory). In any case, these operations may be performed automatically (for example, with a predefined period without any reset command), or they may also be omitted; for example, the reference spectrum may be determined in a single place (for example, at the target communication device and then deployed to all the relay communication devices), or it may be simply preloaded.

In an embodiment, the alarm coding and/or the reset coding has a robustness higher than a robustness of the information coding.

However, the higher robustness of the alarm coding and/or of the reset coding may be measured and achieved in any way (for example, with repeated transmissions), with the corresponding alarm/reset signals that may be transmitted along the pipeline even without requiring any regeneration thereof. In any case, in an alternative implementation the alarm/reset coding may be the same as the information coding. In this way, the structure of the system is significantly simplified. However, the alarm/reset signal and messages too may be subject now to the end/intermediate transmission drift. Therefore, some alarm/reset messages may be lost; particularly, in this case it is possible to ensure the recognition of the last malfunctioning condition only along the functional structure (with any preceding malfunctioning condition possibly concealed that may be recognized later after the fixing of all the next ones).

In an embodiment, the functional structure comprises a pipeline; the information source comprises one or more sensors associated with the pipeline.

However, the pipeline may be of any type (for example, for transporting any fluid, either compressible or not, such as gas, sewage, mud or slurry, in any application, for example, material delivery or transport); more generally, the same technique may also be applied to any other functional structure with any other function (for example, a bridge, a rail). The sensors may be in any number and of any type (for example, for measuring viscosity, substrate stability, waves, moisture); more generally, the information may be received from any information source and it may be provided to any information target (for example, from control stations to a central server).

Generally, similar considerations apply if the system has a different structure or comprises equivalent components, or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

It should be noted that the above described system is suitable to be implemented and put on the market even as a stand-alone product, in order to be used with existing functional structures (as a modification kit for after-market applications).

A further embodiment provides a method for transmitting information from an information source to an information target, wherein a functional structure having a function different from the transmission of information is arranged between the information source and the information target. The method comprises: receiving an inbound information message from the information source, encoding the inbound information message into an inbound information signal according to an information coding based on an information vibration different from an operation vibration of the functional structure in operation, forcing the functional structure to vibrate in correspondence to the information source according to the inbound information signal, monitoring a structural vibration of the functional structure in correspondence to the information target to detect an outbound information signal conforming to the information coding, decoding the outbound information signal into an outbound information message according to the information coding, and providing an indication of the outbound information message to the information target.

Generally, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

A further embodiment provides a computer program, which is configured for causing a computing system to perform the steps of the above-described method. A further embodiment provides a computer program product comprising a non-transitory computer readable medium embodying a computer program, which computer program is loadable into a working memory of a computing system thereby configuring the computing system to perform the same method.

However, similar considerations apply if the program is structured in a different way, or if additional modules or functions are provided; likewise, the memory structures may be of other types, or they may be replaced with equivalent entities (not necessarily consisting of physical storage media). The program may take any form suitable to be used by any data-processing or computing system or in connection therewith (for example, within a virtual machine), thereby configuring the system to perform the desired operations; particularly, the program may be in the form of external or resident software, firmware, or microcode (either in object code or in source code - for example, to be compiled or interpreted). Moreover, it is possible to provide the program on any computer-usable medium (and particularly as an article of manufacture on a non-transitory medium); the medium may be any element suitable to contain, store, communicate, propagate, or transfer the program. For example, the medium may be of the electronic, magnetic, optical, electromagnetic, infrared, or semiconductor type; examples of such medium are fixed disks (where the program may be pre-loaded), removable disks, tapes, cards, wires, fibers, wireless connections, networks, broadcast waves, and the like. In any case, the solution according to an embodiment of the present disclosure lends itself to be implemented even with a hardware structure (for example, integrated in a chip of semiconductor material), or with a combination of software and hardware suitably programmed or otherwise configured.

## Claims

1. A system (300) for transmitting information from an information source (130) to an information target (105) wherein a functional structure (125) having a function different from the transmission of information is arranged between the information source and the information target, the system comprising:
a source communication device (305s) arranged in correspondence to the information source, the source communication device comprising:
means (355s,542) for receiving an inbound information message from the information source,
means (350s,544-546) for encoding the inbound information message into an inbound information signal according to an information coding based on an information vibration different from an operation vibration of the functional structure in operation, and
means (310s,548) for forcing the functional structure to vibrate according to the inbound information signal; and
a target communication device (305t) arranged in correspondence to the information target, the target communication device comprising:
means (310t,574-576) for monitoring a structural vibration of the functional structure to detect an outbound information signal conforming to the information coding,
means (350t,578) for decoding the outbound information signal into an outbound information message according to the information coding,
means (360t,586-588) for providing an indication of the outbound information message to the information target,
**characterized in that**
the target communication device further comprises:
means (350t,582) for detecting an end transmission drift in response to a frequency shift of the outbound information signal,
means (350t,590) for recognizing, in response to the end transmission drift, a corresponding malfunctioning condition being indicative of a malfunctioning in a section of the functional structure (125) up to the target communication device from the source communication device (305s), and
means (360t,596) for outputting an indication of the corresponding malfunctioning condition.

2. The system (300) according to claim 1, wherein the target communication device (305t) comprises:
means (350t,582) for detecting the end transmission drift in response to a non-valid value of the outbound information message.

3. The system (300) according to claim 1 or 2, wherein the target communication device (305t) comprises:
means (310t,350t,592) for acquiring an operation spectrum of an operation signal indicative of the operation vibration of the functional structure (125) in response to the corresponding malfunctioning condition,
means (310t,350t,594) for classifying the corresponding malfunctioning condition according to a comparison between the operation spectrum and a reference spectrum of a reference signal indicative of a reference vibration of the functional structure in a reference condition.

4. The system (300) according to claim 3, wherein the target communication device (305t) comprises:
means (350t,502) for receiving a reset command,
means (310t,350t,504) for acquiring the reference spectrum in response to the reset command,
means (350t;508) for storing an indication of the reference spectrum,
means (350t,510) for generating an inbound reset message comprising an indication of the reset command,
means (350t,512) for encoding the inbound reset message into an inbound reset signal according to a reset coding based on a reset vibration different from the operation vibration, and
means (310r,514) for forcing the functional structure to vibrate according to the inbound reset signal.

5. The system (300) according to any claim from 1 to 4, further comprising one or more relay communication devices (305r) ordered along the functional structure (125) from the source communication device (305s) to the target communication device (305t), each relay communication device comprising:
means (310r,516-518) for monitoring the structural vibration of the functional structure to detect an outbound intermediate signal conforming to the information coding,
means (350r,520) for decoding the outbound intermediate signal into an outbound intermediate message according to the information coding,
means (350r,554) for regenerating the outbound information signal by encoding the outbound intermediate message according to the information coding, and
means (310t,556) for forcing the functional structure to vibrate according to the regenerated outbound information signal, the malfunctioning condition being indicative of a malfunctioning in a section of the functional structure (125) up to the target communication device from a last one of the relay communication devices (305r).

6. The system (300) according to claim 5, wherein each relay communication device (305r) comprises:
means (350r,550) for detecting an intermediate transmission drift in response to a frequency shift of the outbound intermediate signal and/or to a non-valid value of the outbound intermediate message,
means (350r,558) for recognizing, in response to the intermediate transmission drift, a corresponding malfunctioning condition being indicative of a malfunctioning in a section of the functional structure (125) up to the relay communication device from a preceding one of the relay communication devices when available or from the source communication device (305s) otherwise,
means (350r,564) for generating an inbound alarm message comprising an indication of the corresponding malfunctioning condition,
means (350r,566) for encoding the inbound alarm message into an inbound alarm signal according to an alarm coding based on an alarm vibration different from the operation vibration, and
means (310r,568) for forcing the functional structure to vibrate according to the inbound alarm signal,
and wherein the target communication device (350t) comprises:
means (310t,574-576) for monitoring the structural vibration of the functional structure to detect an outbound alarm signal conforming to the alarm coding,
means (350t,578) for decoding the outbound alarm signal into an outbound alarm message according to the alarm coding, and
means (360t,598) for outputting an indication of the malfunctioning condition of the outbound alarm message.

7. The system (300) according to any claim from 6, wherein the alarm coding has a robustness higher than a robustness of the information coding.

8. The system (300) according to any claim from 5 to 7, wherein each relay communication device (305r) comprises:
means (310t,350t,592;310r,350r,560) for acquiring a further operation spectrum of a further operation signal indicative of the operation vibration of the functional structure (125) in response to the corresponding malfunctioning condition,
means (310t,350t,594;310r,350r,562) for classifying the corresponding malfunctioning condition according to a comparison between the further operation spectrum and a reference spectrum of a reference signal indicative of a reference vibration of the functional structure in a reference condition.

9. The system (300) according to claim 8 when dependent on claim 4, wherein each relay communication device (305r) comprises:
means (310r,516-518) for monitoring the structural vibration of the functional structure to detect an outbound reset signal conforming to the reset coding,
means (350r,520) for decoding the outbound reset signal into an outbound reset message according to the reset coding,
means (310r,350r,524) for acquiring the reference spectrum in response to the outbound reset message, and
means (350r;526) for storing an indication of the reference spectrum.

10. The system (300) according to any claim from 4 to 9, wherein the reset coding has a robustness higher than a robustness of the information coding.

11. The system (300) according to any claim from 1 to 10, further comprising:
means (350t,504) for acquiring a still further operation spectrum of a still further operation signal indicative of the operation vibration, and
means (350t,506) for setting a frequency of the information vibration according to a relative maximum or to a relative minimum of the still further operation spectrum.

12. The system (300) according to any claim from 1 to 11, wherein the information source (130) comprises a plurality of source entities (130), the source communication device (305s) comprising:
means (350s,544) for selecting a frequency of the inbound information signal according to a transmitting one of the source entities from which the inbound information message is received,
and the target communication device (305t) comprising:
means (350t,586) for determining the transmitting source entity from a frequency of the outbound information signal, and
means (360t,588) for providing an indication of the transmitting source entity to the information target (105).

13. The system (300) according to any claim from 1 to 12, wherein the functional structure (125) comprises a pipeline (125) and wherein the information source (130) comprises one or more sensors (130) associated with the pipeline.

14. A method (500) for transmitting information from an information source to an information target, wherein a functional structure having a function different from the transmission of information is arranged between the information source and the information target, the method comprising:
receiving (542) an inbound information message from the information source,
encoding (544-546) the inbound information message into an inbound information signal according to an information coding based on an information vibration different from an operation vibration of the functional structure in operation,
forcing (548) the functional structure to vibrate in correspondence to the information source according to the inbound information signal,
monitoring (574-576) a structural vibration of the functional structure in correspondence to the information target to detect an outbound information signal conforming to the information coding,
decoding (578) the outbound information signal into an outbound information message according to the information coding,
providing (586-588) an indication of the outbound information message to the information target
**characterized by**
detecting (582) an end transmission drift in response to a frequency shift of the outbound information signal,
recognizing (590), in response to the end transmission drift, a corresponding malfunctioning condition being indicative of a malfunctioning in a section of the functional structure (125) up to the target communication device from the source communication device (305s), and
outputting (596) an indication of the corresponding malfunctioning condition.

15. A computer program (410s,420t) configured for causing a computing system (350s,350t) to perform the steps of the method (500) according to claim 14 when the computer program is executed on the computing system.

## Patentansprüche

1. System (300) zum Übertragen von Information von einer Informationsquelle (130) zu einem Informationsziel (105), wobei eine funktionale Struktur (125) mit einer von der Übertragung von Information verschiedenen Funktion zwischen der Informationsquelle und dem Informationsziel angeordnet ist, das System umfassend:
eine Quellenkommunikationsvorrichtung (305s), die in Übereinstimmung mit der Informationsquelle angeordnet ist, die Quellenkommunikationsvorrichtung umfassend:
Mittel (355s, 542) zum Empfangen einer eingehenden Informationsnachricht von der Informationsquelle,
Mittel (350s, 544-546) zum Kodieren der eingehenden Informationsnachricht in ein eingehendes Informationssignal gemäß einer Informationskodierung auf Grundlage einer Informationsvibration, die sich von einer Betriebsvibration der funktionalen Struktur im Betrieb unterscheidet, und
Mittel (310s, 548) zum Erzwingen der funktionalen Struktur, gemäß dem eingehenden Informationssignal zu vibrieren; und
eine Zielkommunikationsvorrichtung (305t), die in Übereinstimmung mit dem Informationsziel angeordnet ist, die Zielkommunikationsvorrichtung umfassend:
Mittel (310t, 574-576) zum Überwachen einer strukturellen Vibration der funktionalen Struktur, um ein ausgehendes Informationssignal zu erfassen, das der Informationskodierung entspricht,
Mittel (350t, 578) zum Dekodieren des ausgehenden Informationssignals in eine ausgehende Informationsnachricht gemäß der Informationskodierung,
Mittel (360t, 586-588) zum Bereitstellen einer Angabe der ausgehenden Informationsnachricht an das Informationsziel,
**dadurch gekennzeichnet, dass**
die Zielkommunikationsvorrichtung ferner aufweist:
Mittel (350t, 582) zum Erfassen einer Endübertragungsdrift in Reaktion auf eine Frequenzverschiebung des ausgehenden Informationssignals,
Mittel (350t, 590) zum Erkennen, in Reaktion auf die Endübertragungsdrift, eines entsprechenden Fehlfunktionszustandes, der eine Fehlfunktion in einem Abschnitt der funktionalen Struktur (125) bis zu der Zielkommunikationsvorrichtung von der Quellenkommunikationsvorrichtung (305s) anzeigt, und
Mittel (360t, 596) zum Ausgeben einer Angabe des entsprechenden Fehlfunktionszustandes.

2. System (300) nach Anspruch 1, wobei die Zielkommunikationsvorrichtung (305t) umfasst:
Mittel (350t, 582) zum Erfassen der Endübertragungsdrift in Reaktion auf einen nicht gültigen Wert der ausgehenden Informationsnachricht.

3. System (300) nach Anspruch 1 oder 2, wobei die Zielkommunikationsvorrichtung (305t) umfasst:
Mittel (310t, 350t, 592) zum Erfassen eines Betriebsspektrums eines Betriebssignals, das die Betriebsvibration der funktionalen Struktur (125) in Reaktion auf den entsprechenden Fehlfunktionszustand anzeigt,
Mittel (310t, 350t, 594) zum Klassifizieren des entsprechenden Fehlfunktionszustandes gemäß einem Vergleich zwischen dem Betriebsspektrum und einem Referenzspektrum eines Referenzsignals, das eine Referenzvibration der funktionalen Struktur unter einer Referenzbedingung anzeigt.

4. System (300) nach Anspruch 3, wobei die Zielkommunikationsvorrichtung (305t) umfasst:
Mittel (350t, 502) zum Empfangen eines Rücksetzbefehls,
Mittel (310t, 350t, 504) zum Erfassen des Referenzspektrums in Reaktion auf den Rücksetzbefehl,
Mittel (350t; 508) zum Speichern einer Angabe des Referenzspektrums,
Mittel (350t, 510) zum Erzeugen einer eingehenden Rücksetznachricht, die eine Angabe des Rücksetzbefehls enthält,
Mittel (350t, 512) zum Kodieren der eingehenden Rücksetznachricht in ein eingehendes Rücksetzsignal gemäß einer Rücksetzkodierung auf Grundlage einer Rücksetzvibration, die sich von der Betriebsvibration unterscheidet, und
Mittel (310r, 514) zum Erzwingen der funktionalen Struktur, gemäß dem eingehenden Rücksetzsignal zu vibrieren.

5. System (300) nach einem der Ansprüche 1 bis 4, ferner umfassend eine oder mehrere Relaiskommunikationsvorrichtungen (305r), die entlang der funktionalen Struktur (125) von der Quellenkommunikationsvorrichtung (305s) zu der Zielkommunikationsvorrichtung (305t) angeordnet sind, jede Relaiskommunikationsvorrichtung umfassend:
Mittel (310r, 516-518) zum Überwachen der strukturellen Vibration der funktionalen Struktur, um ein ausgehendes Zwischensignal zu erfassen, das der Informationskodierung entspricht,
Mittel (350r, 520) zum Dekodieren des ausgehenden Zwischensignals in eine ausgehende Zwischennachricht gemäß der Informationskodierung,
Mittel (350r, 554) zum Regenerieren des ausgehenden Informationssignals durch Kodieren der ausgehenden Zwischennachricht gemäß der Informationskodierung, und
Mittel (310t, 556) zum Erzwingen der funktionalen Struktur, gemäß dem regenerierten ausgehenden Informationssignal zu vibrieren, wobei der Fehlfunktionszustand eine Fehlfunktion in einem Abschnitt der funktionalen Struktur (125) bis zu der Zielkommunikationsvorrichtung von einem letzten der Relaiskommunikationsgeräte (305r) anzeigt.

6. System (300) nach Anspruch 5, wobei jede Relaiskommunikationsvorrichtung (305r) umfasst:
Mittel (350r, 550) zum Erfassen einer Zwischenübertragungsdrift in Reaktion auf eine Frequenzverschiebung des ausgehenden Zwischensignals und/oder auf einen nicht gültigen Wert der ausgehenden Zwischennachricht,
Mittel (350r, 558) zum Erkennen, in Reaktion auf die Zwischenübertragungsdrift, eines entsprechenden Fehlfunktionszustandes, der eine Fehlfunktion in einem Abschnitt der funktionalen Struktur (125) bis zu der Relaiskommunikationsvorrichtung von einer vorhergehenden der Relaiskommunikationsvorrichtungen anzeigt, wenn verfügbar, oder ansonsten von der Quellkommunikationsvorrichtung (305s),
Mittel (350r, 564) zum Erzeugen einer eingehenden Alarmnachricht mit einer Angabe des entsprechenden Fehlfunktionszustandes,
Mittel (350r, 566) zum Kodieren der eingehenden Alarmnachricht in ein eingehendes Alarmsignal gemäß einer Alarmkodierung auf Grundlage einer Alarmvibration, die sich von der Betriebsvibration unterscheidet, und
Mittel (310r, 568) zum Erzwingen der funktionalen Struktur, gemäß dem eingehenden Alarmsignal zu vibrieren,
und wobei die Zielkommunikationsvorrichtung (350t) umfasst:
Mittel (310t, 574-576) zum Überwachen der strukturellen Vibration der funktionalen Struktur, um ein ausgehendes Alarmsignal zu erfassen, das der Alarmkodierung entspricht,
Mittel (350t, 578) zum Dekodieren des ausgehenden Alarmsignals in eine ausgehende Alarmnachricht entsprechend der Alarmkodierung, und
Mittel (360t, 598) zum Ausgeben einer Angabe des Fehlfunktionszustandes der ausgehenden Alarmnachricht.

7. System (300) nach Anspruch 6, wobei die Alarmkodierung eine Robustheit aufweist, die höher ist als eine Robustheit der Informationskodierung.

8. System (300) nach einem der Ansprüche 5 bis 7, wobei jede Relaiskommunikationsvorrichtung (305r) umfasst:
Mittel (310t, 350t, 592; 310r, 350r, 560) zum Erfassen eines weiteren Betriebsspektrums eines weiteren Betriebssignals, das die Betriebsvibration der funktionalen Struktur (125) in Reaktion auf den entsprechenden Fehlfunktionszustand anzeigt,
Mittel (310t, 350t, 594; 310r, 350r, 562) zum Klassifizieren des entsprechenden Fehlfunktionszustandes gemäß einem Vergleich zwischen dem weiteren Betriebsspektrum und einem Referenzspektrum eines Referenzsignals, das eine Referenzvibration der funktionalen Struktur unter einer Referenzbedingung anzeigt.

9. System (300) nach Anspruch 8, wenn abhängig von Anspruch 4, wobei jede Relaiskommunikationsvorrichtung (305r) umfasst:
Mittel (310r, 516-518) zum Überwachen der strukturellen Vibration der funktionalen Struktur, um ein ausgehendes Rücksetzsignal zu erfassen, das der Rücksetzkodierung entspricht,
Mittel (350r, 520) zum Dekodieren des ausgehenden Rücksetzsignals in eine ausgehende Rücksetznachricht gemäß der Rücksetzkodierung,
Mittel (310r, 350r, 524) zum Erfassen des Referenzspektrums in Reaktion auf die ausgehende Rücksetznachricht, und
Mittel (350r; 526) zum Speichern einer Angabe des Referenzspektrums.

10. System (300) nach einem der Ansprüche 4 bis 9, wobei die Rücksetzkodierung eine Robustheit aufweist, die höher ist als eine Robustheit der Informationskodierung.

11. System (300) nach einem der Ansprüche 1 bis 10, ferner umfassend:
Mittel (350t, 504) zum Erfassen eines noch weiteren Betriebsspektrums eines noch weiteren Betriebssignals, das die Betriebsvibration anzeigt, und
Mittel (350t, 506) zum Einstellen einer Frequenz der Informationsvibration gemäß einem relativen Maximum oder einem relativen Minimum des noch weiteren Betriebsspektrums.

12. System (300) nach einem der Ansprüche 1 bis 11, wobei die Informationsquelle (130) eine Vielzahl von Quelleneinheiten (130) umfasst, wobei die Quellenkommunikationsvorrichtung (305s) umfasst:
Mittel (350s, 544) zum Auswählen einer Frequenz des eingehenden Informationssignals gemäß einem Übertragen einer der Quelleneinheiten, von denen die eingehende Informationsnachricht empfangen wird,
und die Zielkommunikationsvorrichtung (305t) umfasst:
Mittel (350t, 586) zum Bestimmen der Sendequelleneinheit aus einer Frequenz des ausgehenden Informationssignals, und
Mittel (360t, 588) zum Bereitstellen einer Angabe der Sendequelleneinheit an das Informationsziel (105).

13. System (300) nach einem der Ansprüche 1 bis 12, wobei die funktionale Struktur (125) eine Leitung (125) umfasst und wobei die Informationsquelle (130) einen oder mehrere der Leitung zugeordnete Sensoren (130) umfasst.

14. Verfahren (500) zum Übertragen von Information von einer Informationsquelle zu einem Informationsziel, wobei eine funktionale Struktur mit einer von der Übertragung von Information verschiedenen Funktion zwischen der Informationsquelle und dem Informationsziel angeordnet ist, das Verfahren umfassend:
Empfangen (542) einer eingehenden Informationsnachricht von der Informationsquelle,
Kodieren (544-546) der eingehenden Informationsnachricht in ein eingehendes Informationssignal gemäß einer Informationskodierung auf Grundlage einer Informationsvibration, die sich von einer Betriebsvibration der funktionalen Struktur im Betrieb unterscheidet,
Erzwingen (548) der funktionalen Struktur, gemäß der Informationsquelle entsprechend dem eingehenden Informationssignal zu vibrieren,
Überwachen (574-576) einer strukturellen Vibration der funktionalen Struktur in Übereinstimmung mit dem Informationsziel, um ein ausgehendes Informationssignal zu erfassen, das der Informationskodierung entspricht,
Dekodieren (578) des ausgehenden Informationssignals in eine ausgehende Informationsnachricht gemäß der Informationskodierung,
Bereitstellen (586-588) einer Angabe der ausgehenden Informationsnachricht an das Informationsziel,
charakterisiert durch
Erfassen (582) einer Endübertragungsdrift in Reaktion auf eine Frequenzverschiebung des ausgehenden Informationssignals,
Erkennen (590), in Reaktion auf die Endübertragungsdrift, eines entsprechenden Fehlfunktionszustandes, der eine Fehlfunktion in einem Abschnitt der funktionalen Struktur (125) bis zu der Zielkommunikationsvorrichtung von der Quellenkommunikationsvorrichtung (305s) anzeigt, und
Ausgabe (596) einer Angabe des entsprechenden Fehlfunktionszustandes.

15. Computerprogramm (410s, 420t), das solcherart eingerichtet ist, dass ein Rechensystem (350s, 350t) die Schritte des Verfahrens (500) gemäß Anspruch 14 ausführt, wenn das Computerprogramm auf dem Computersystem ausgeführt wird.

## Revendications

1. Système (300) pour transmettre des informations à partir d'une source d'informations (130) à une cible d'informations (105), dans lequel une structure fonctionnelle (125) ayant une fonction différente de la transmission d'informations est agencée entre la source d'informations et la cible d'informations, le système comprenant :
un dispositif de communication source (305s) agencé en correspondance avec la source d'informations, le dispositif de communication source comprenant :
des moyens (355s, 542) pour recevoir un message d'informations entrant provenant de la source d'informations,
des moyens (350s, 544-546) pour coder le message d'informations entrant en un signal d'informations entrant conformément à un codage d'informations basé sur une vibration d'informations différente d'une vibration de fonctionnement de la structure fonctionnelle en fonctionnement, et
des moyens (310s, 548) pour forcer la structure fonctionnelle à vibrer selon le signal d'informations entrant ; et
un dispositif de communication cible (305t) agencé en correspondance avec la cible d'informations, le dispositif de communication cible comprenant :
des moyens (310t, 574-576) pour surveiller une vibration structurelle de la structure fonctionnelle pour détecter un signal d'informations sortant se conformant au codage d'informations,
des moyens (350t, 578) pour décoder le signal d'informations sortant en un message d'informations sortant conformément au codage d'informations,
des moyens (360t, 586-588) pour fournir une indication du message d'informations sortant à la cible d'informations,
**caractérisé en ce que**
le dispositif de communication cible comprend en outre :
des moyens (350t, 582) pour détecter une dérive de transmission finale en réponse à un décalage fréquentiel du signal d'informations sortant,
des moyens (350t, 590) pour reconnaître, en réponse à la dérive de transmission finale, un état de dysfonctionnement correspondant qui est indicatif d'un dysfonctionnement dans une section de la structure fonctionnelle (125) jusqu'au dispositif de communication cible à partir du dispositif de communication source (305s), et
des moyens (360t, 596) pour produire une indication de l'état de dysfonctionnement correspondant.

2. Système (300) selon la revendication 1, dans lequel le dispositif de communication cible (305t) comprend :
des moyens (350t, 582) pour détecter la dérive de transmission finale en réponse à une valeur non valide du message d'informations sortant.

3. Système (300) selon la revendication 1 ou 2, dans lequel le dispositif de communication cible (305t) comprend :
des moyens (310t, 350t, 592) pour acquérir un spectre de fonctionnement d'un signal de fonctionnement indicatif de la vibration de fonctionnement de la structure fonctionnelle (125) en réponse à l'état de dysfonctionnement correspondant,
des moyens (310t, 350t, 594) pour classifier l'état de dysfonctionnement correspondant en fonction d'une comparaison entre le spectre de fonctionnement et un spectre de référence d'un signal de référence indicatif d'une vibration de référence de la structure fonctionnelle dans un état de référence.

4. Système (300) selon la revendication 3, dans lequel le dispositif de communication cible (305t) comprend :
des moyens (350t, 502) pour recevoir une commande de réinitialisation,
des moyens (310t, 350t, 504) pour acquérir le spectre de référence en réponse à la commande de réinitialisation,
des moyens (350t ; 508) pour mémoriser une indication du spectre de référence,
des moyens (350t, 510) pour générer un message de réinitialisation entrant comprenant une indication de la commande de réinitialisation,
des moyens (350t, 512) pour coder le message de réinitialisation entrant en un signal de réinitialisation entrant conformément à un codage de réinitialisation basé sur une vibration de réinitialisation différente de la vibration de fonctionnement, et
des moyens (310r, 514) pour forcer la structure fonctionnelle à vibrer conformément au signal de réinitialisation entrant.

5. Système (300) selon l'une quelconque des revendications 1 à 4, comprenant en outre un ou plusieurs dispositifs de communication relais (305r) ordonnés le long de la structure fonctionnelle (125) à partir du dispositif de communication source (305s) jusqu'au dispositif de communication cible (305t), chaque dispositif de communication relais comprenant :
des moyens (310r, 516-518) pour surveiller la vibration structurelle de la structure fonctionnelle pour détecter un signal intermédiaire sortant se conformant au codage d'informations,
des moyens (350r, 520) pour décoder le signal intermédiaire sortant en un message intermédiaire sortant conformément au codage d'informations,
des moyens (350r, 554) pour régénérer le signal d'informations sortant en codant le message intermédiaire sortant conformément au codage d'informations, et
des moyens (310t, 556) pour forcer la structure fonctionnelle à vibrer en fonction du signal d'informations sortant régénéré, l'état de dysfonctionnement étant indicatif d'un dysfonctionnement dans une section de la structure fonctionnelle (125) jusqu'au dispositif de communication cible à partir d'au moins l'un des dispositifs de communication relais (305r).

6. Système (300) selon la revendication 5, dans lequel chaque dispositif de communication relais (305r) comprend :
des moyens (350r, 550) pour détecter une dérive de transmission intermédiaire en réponse à un décalage de fréquence du signal intermédiaire sortant et/ou à une valeur non valide du message intermédiaire sortant,
des moyens (350r, 558) pour reconnaître, en réponse à la dérive de transmission intermédiaire, un état de dysfonctionnement correspondant qui est indicatif d'un dysfonctionnement dans une section de la structure fonctionnelle (125) jusqu'au dispositif de communication relais à partir de l'un précédant des dispositifs de communication relais si disponible ou à partir d'un dispositif de communication source (305s) dans l'autre cas,
des moyens (350r, 564) pour générer un message d'alarme entrant comprenant une indication de l'état de dysfonctionnement correspondant,
des moyens (350r, 566) pour coder le message d'alarme entrant en un signal d'alarme entrant conformément à un codage d'alarme basé sur une vibration d'alarme différente de la vibration de fonctionnement, et
des moyens (310r, 568) pour forcer la structure fonctionnelle à vibrer conformément au signal d'alarme entrant,
et dans lequel le dispositif de communication cible (350t) comprend :
des moyens (310t, 574-576) pour surveiller la vibration structurelle de la structure fonctionnelle pour détecter un signal d'alarme sortant se conformant au codage d'alarme,
des moyens (350t, 578) pour décoder le signal d'alarme sortant en un message d'alarme sortant conformément au codage d'alarme, et
des moyens (360t, 598) pour produire une indication de l'état de dysfonctionnement du message d'alarme sortant.

7. Système (300) selon l'une quelconque des revendications à partir de la 6, dans lequel le codage d'alarme a une robustesse supérieure à la robustesse du codage d'informations.

8. Système (300) selon l'une quelconque des revendications 5 à 7, dans lequel chaque dispositif de communication relais (305r) comprend :
des moyens (310t, 350t, 592 ; 310r, 350r, 560) pour acquérir un autre spectre de fonctionnement d'un autre signal de fonctionnement indicatif de la vibration de fonctionnement de la structure fonctionnelle (125) en réponse à l'état de dysfonctionnement correspondant,
des moyens (310t, 350t, 594 ; 310r, 350r, 562) pour classifier l'état de dysfonctionnement correspondant en fonction d'une comparaison entre l'autre spectre de fonctionnement et un spectre de référence d'un signal de référence indicatif d'une vibration de référence de la structure fonctionnelle dans un état de référence.

9. Système (300) selon la revendication 8 dans sa dépendance de la revendication 4, dans lequel chaque dispositif de communication relais (305r) comprend :
des moyens (310r, 516-518) pour surveiller la vibration structurelle de la structure fonctionnelle pour détecter un signal de réinitialisation sortant se conformant au codage de réinitialisation,
des moyens (350r, 520) pour décoder le signal de réinitialisation sortant en un message de réinitialisation sortant conformément au codage de réinitialisation,
des moyens (310r, 350r, 524) pour acquérir le spectre de référence en réponse au message de réinitialisation sortant, et
des moyens (350r ; 526) pour mémoriser une indication du spectre de référence.

10. Système (300) selon l'une quelconque des revendications 4 à 9, dans lequel le codage de réinitialisation a une robustesse supérieure à la robustesse du codage d'informations.

11. Système (300) selon l'une quelconque des revendications 1 à 10, comprenant en outre :
des moyens (350t, 504) pour acquérir encore un autre spectre de fonctionnement d'encore un autre signal de fonctionnement indicatif de la vibration de fonctionnement, et
des moyens (350t, 506) pour régler une fréquence de la vibration d'informations en fonction d'un maximum relatif ou d'un minimum relatif dudit encore un autre spectre de fonctionnement.

12. Système (300) selon l'une quelconque des revendications 1 à 11, dans lequel la source d'informations (130) comprend une pluralité d'entités sources (130), le dispositif de communication source (305s) comprenant :
des moyens (350s, 544) pour sélectionner une fréquence du signal d'informations entrant en fonction de l'une émettrice des entités sources à partir de laquelle le message d'informations entrant est reçu,
et le dispositif de communication cible (305t) comprenant :
des moyens (350t, 586) pour déterminer l'entité source émettrice à partir d'une fréquence du signal d'informations sortant, et
des moyens (360t, 588) pour fournir une indication de l'entité source émettrice à la cible d'informations (105).

13. Système (300) selon l'une quelconque des revendications 1 à 12, dans lequel la structure fonctionnelle (125) comprend un pipeline (125) et dans lequel la source d'informations (130) comprend un ou plusieurs capteurs (130) associés au pipeline.

14. Procédé (500) pour transmettre des informations à partir d'une source d'informations à une cible d'informations, dans lequel une structure fonctionnelle ayant une fonction différente de la transmission d'informations est agencée entre la source d'informations et la cible d'informations, le procédé comprenant :
recevoir (542) un message d'informations entrant provenant de la source d'informations,
coder (544, 546) le message d'informations entrant en un signal d'informations entrant conformément à un codage d'informations basé sur une vibration d'informations différente d'une vibration de fonctionnement de la structure fonctionnelle en fonctionnement, et
forcer (548) la structure fonctionnelle à vibrer en correspondance avec le signal d'informations entrant ; et
surveiller (574-576) une vibration structurelle de la structure fonctionnelle en correspondance avec la cible d'informations pour détecter un signal d'informations sortant se conformant au codage d'informations,
décoder (578) le signal d'informations sortant en un message d'informations sortant conformément au codage d'informations,
fournir (586-588) une indication du message d'informations sortant à la cible d'informations,
**caractérisé par**
détecter (582) une dérive de transmission finale en réponse à un décalage fréquentiel du signal d'informations sortant,
reconnaître (590), en réponse à la dérive de transmission finale, un état de dysfonctionnement correspondant qui est indicatif d'un dysfonctionnement dans une section de la structure fonctionnelle (125) jusqu'au dispositif de communication cible à partir du dispositif de communication source (305s), et
produire (596) une indication de l'état de dysfonctionnement correspondant.

15. Programme d'ordinateur (410s, 420t) agencé pour amener un système informatique (350s, 350t) à réaliser les étapes de procédé (500) selon la revendication 14 lorsque le programme d'ordinateur est exécuté sur le système informatique.
